(19) Europäisches Patentamt
European Patent Office
Office européen des brevets

(11) **EP 2 869 314 B1**

(12) **EUROPÄISCHE PATENTSCHRIFT**

(45) Veröffentlichungstag und Bekanntmachung des Hinweises auf die Patenterteilung:
**12.12.2018 Patentblatt 2018/50**

(51) Int Cl.:
***H01F 27/30*** *(2006.01)*          ***H01F 27/40*** *(2006.01)*
***G01D 5/353*** *(2006.01)*          ***G01L 1/24*** *(2006.01)*
***H02H 7/04*** *(2006.01)*

(21) Anmeldenummer: **14186761.4**

(22) Anmeldetag: **29.09.2014**

(54) **Elektrischer Transformator oder elektrische Drosselspule und Verfahren zum Betreiben des elektrischen Transformators oder der elektrischen Drosselspule**

Electric transformer or electric choke coil and method for operating the electrical transformer or electric choke coil

Transformateur électrique ou bobine d'inductance et procédé de fonctionnement du transformateur électrique ou de la bobine d'inductance

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **30.10.2013 DE 102013222056**

(43) Veröffentlichungstag der Anmeldung:
**06.05.2015 Patentblatt 2015/19**

(73) Patentinhaber: **ALSTOM Technology Ltd 5400 Baden (CH)**

(72) Erfinder:
• **Hoba, Günther**
  **41189 Mönchengladbach (DE)**
• **Rösner, Michael**
  **52457 Aldenhoven (DE)**

(74) Vertreter: **DREISS Patentanwälte PartG mbB Friedrichstraße 6 70174 Stuttgart (DE)**

(56) Entgegenhaltungen:
WO-A1-2007/000323    DE-A1- 3 536 900
DE-A1- 19 935 515    DE-U1- 8 316 592
RO-B1- 126 339    US-A1- 2012 247 229

**Beschreibung**

Die Erfindung betrifft einen elektrischen Transformator oder eine elektrische Drosselspule sowie ein Verfahren zum Betreiben des elektrischen Transformators oder der elektrische Drosselspule.

Aus der DE 8316592 U1 ist eine Vorrichtung zum Nachspannen der Wicklungen eines Transformators bekannt, bei der entweder Dehnungsmessstreifen auf eine Spannplatte aufgeschweißt sind, um über eine entsprechende Messeinrichtung eine genaue Feststellung der Längenänderung und damit Zugbeanspruchung der Spannplatte zu ermöglichen. Ebenso ist aus dieser Druckschrift bekannt, parallel zu der Spannplatte eine unbelastete Stange anzuordnen, die von einer Längenänderung aus der Zugspannung nicht betroffen wird. Die Längungsunterschiede zwischen der Spannplatte und der Stange werden über einen Zeiger oder durch eine optische Kontrolle über ein Sichtfenster sichtbar gemacht.

Aus der DE 24 48 876 A1 ist ein Verfahren zum Messen der Einspannkraft von Transformatorwicklungen bekannt, wobei die Transformatorwicklungen mechanisch zwischen Distanzstücken in Stützringen eingespannt sind. Ein Druckmittel, vorzugsweise Transformatoröl, wird von einer Druckmittelquelle durch einen Kanal in wenigstens einem der an dem Stützungen anliegenden Distanzstücke zu einem Bereich zwischen dem genannten Distanzstück und einem daran anliegenden Distanzstück in der Wicklung gepresst. Die herrschende Einspannkraft wird mithilfe einer Eichkurve aus dem gemessenen Druck hergeleitet.

Das der Erfindung zugrundeliegende Problem wird durch einen elektrischen Transformator oder eine elektrische Drosselspule nach dem Anspruch 1 sowie durch einen nebengeordneten Verfahrensanspruch gelöst. Vorteilhafte Weiterbildungen sind in den Unteransprüchen angegeben. Für die Erfindung wichtige Merkmale finden Sie ferner in der nachfolgenden Beschreibung und in den Zeichnungen, wobei die Merkmale sowohl in Alleinstellung als auch in unterschiedlichen Kombinationen für die Erfindung wichtig sein können, ohne dass hierauf nochmals explizit hingewiesen wird.

Dadurch, dass eine Dehnung eines Einspannelements mittels eines optischen Sensors erfassbar ist, kann die Dehnung des Einspannelements während des Betriebs des elektrischen Transformators oder der elektrischen Drosselspüle ermittelt werden. Da der optische Sensor unempfindlich gegenüber elektromagnetischen Feldern ist, lassen sich unter anderem Veränderungen der Dehnung des Einspannelements bei unterschiedlichen Betriebszuständen des elektrischen Transformators oder der elektrischen Drosselspule erfassen. Darüber hinaus sind Langzeitmessungen möglich, um auch eine eventuelle Verminderung der Einspannung durch die entsprechende Vorrichtung zu erfassen und zu überprüfen. Darüber hinaus ist eine Schadensbegrenzung durch die erfolgende Echtzeitdiagnose möglich. Darüber hinaus können Eigenschaften des elektrischen Transformators oder der elektrischen Drosselspule, die zwischen dem Hersteller und dem Abnehmer vereinbart wurden, genauer überprüft werden, so zum Beispiel die Kurzschlussfestigkeit des elektrischen Transformators.

In einer vorteilhaften Ausführungsform ist der optische Sensor auf einem Metallträger angeordnet, insbesondere mit dem Metallträger verklebt, wobei der Metallträger mit dem Einspannelement materialschlüssig verbunden ist, insbesondere verschweißt ist. Dies hat fertigungstechnische Vorteile. Beispielweise kann der Metallträger bereits mit dem darauf angeordneten optischen Sensor dem Hersteller der Spannplatte bzw. des Einspannelements geliefert werden, wobei der Hersteller des Einspannelements nur die materialschlüssige Verbindung zwischen Metallträger und Einspannelement herstellen muss. So kann eine gleich bleibende Qualität der Anordnung des optischen Sensors gewährleistet werden.

In der Erfindung umfasst der elektrische Transformator mehrere Schenkel mit einem zugeordneten Einspannelement, wobei jedem der Einspannelemente zumindest ein optischer Sensor zugeordnet ist. Durch einen Vergleich der Dehnungen der jeweiligen Einspannelemente kann einer der Schenkel als fehlerbehaftet identifiziert werden. Dadurch wird vorteilhaft eine Identifikation des Fehlerorts bereitgestellt. Insbesondere für weitere Diagnose- und Reparaturverfahren nach einer Abschaltung des elektrischen Transformators kann diese Identifikation des Fehlerorts vorteilhaft zu einer schnelleren Reparatur des elektrischen Transformators genutzt werden.

In einer vorteilhaften Ausführungsform wird ein Fehlerbetrieb erkannt, wenn eine erfasste Dehnung über eine erste Zeitdauer einen Wert außerhalb eines Toleranzbereichs einnimmt. Dies indiziert beispielsweise ein Herausfallen oder Sich Lösen von Distanzstücken, Stützringen, Scheiben oder sonstigen Elementen, die unter Druckbelastung stehen.

In einer vorteilhaften Weiterbildung werden der Leistungstransformator oder die Drosselspule auf den Fehlerbetrieb hin stromlos geschaltet. Dadurch kann vorteilhaft eine Zerstörung der entsprechenden Vorrichtung verhindert werden und weitere Elemente des angeschlossenen Stromnetzes werden geschützt.

In einer vorteilhaften Ausbildung wird ein Kurzschluss erkannt, wenn eine erfasste Dehnung ausgehend von einem ersten Wert, insbesondere in dem Toleranzbereich, zu einem ersten Zeitpunkt einen ersten Schwellwert unterschreitet, die Dehnung zu einem zweiten Zeitpunkt nach dem ersten Zeitpunkt den ersten Schwellwert überschreitet, und die Dehnung zu einem dritten Zeitpunkt nach dem zweiten Zeitpunkt einen zweiten Wert, insbesondere in dem Toleranzbereich einnimmt. Durch die Kurzschlusserkennung mittels der erfassten Dehnung wird vorteilhaft ein Verfahren geschaffen, mit dem die tatsächliche Kurzschlussbelastung des Transformators oder Drosselspule im Betrieb quantitativ und qualitativ erfasst werden kann. Insbesondere ist es möglich, die Intensität des Kurzschlusses sowie die Dauer des Kurzschlusses zu erfassen.

In einer vorteilhaften Ausführungsform wird eine Zeitdauer eines Kurzschlusses in Abhängigkeit von dem ersten und dem zweiten Zeitpunkt ermittelt, wobei über mehrere Kurzschlüsse die Zeitdauer zu einer Gesamtzeitdauer aufsummiert wird, und wobei bei einem Überschreiten eines Grenzwerts durch die Gesamtzeitdauer ein Erreichen der maximalen Lebensdauer oder ein Ende eines Wartungsintervalls festgestellt wird. Durch diese Überwachung können die tatsächlichen Betriebsparameter für ein Erreichen der maximalen Lebensdauer oder beim Feststellen eines Endes eines Wartungsintervalls berücksichtigt werden.

Weitere Merkmale, Anwendungsmöglichkeiten und Vorteile der Erfindung ergeben sich aus der nachfolgenden Beschreibung von Ausführungsbeispielen der Erfindung, die in den Figuren der Zeichnung dargestellt sind. Es werden für funktionsäquivalente Größen und Merkmale in allen Figuren auch bei unterschiedlichen Ausführungsformen die gleichen Bezugszeichen verwendet.

Nachfolgend werden beispielhafte Ausführungsformen der Erfindung unter Bezugnahme auf die Zeichnungen erläutert. In der Zeichnung zeigen:

Figur 1 und 2      jeweils einen schematischen Ausschnitt eines elektrischen Transformators oder einer elektrischen Drosselspule;

Figuren 3 bis 6      ein schematisches Dehnungs-Zeit-Diagramm.

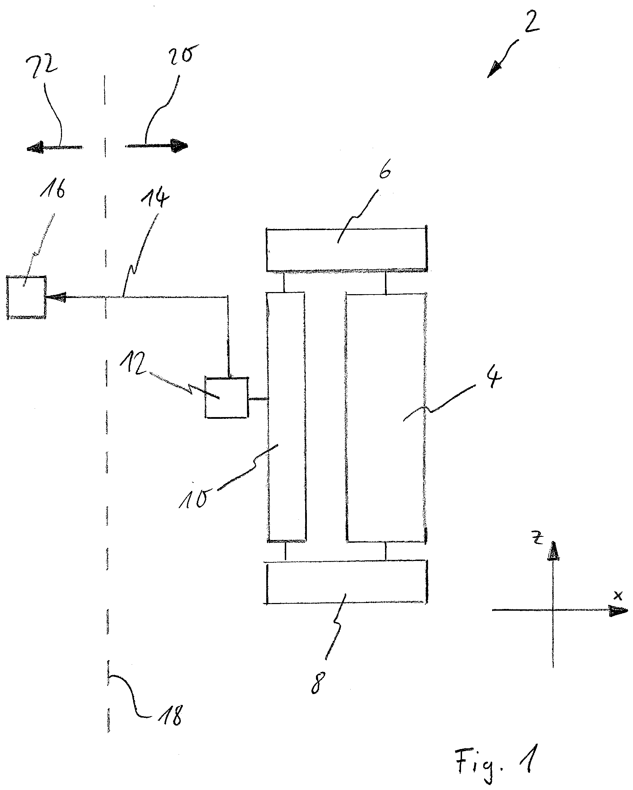

Figur 1 zeigt einen schematischen Ausschnitt 2 eines elektrischen Transformators oder einer elektrischen Drosselspule. Es ist ein Wicklungspaket 4 dargestellt, dass mittels zweiter Verbindungselemente 6 und 8 mit einem Einspannelement 10 verbunden ist. Das Einspannelement 10 steht im Wesentlichen in z-Richtung unter Zug, weshalb das Einspannelement 10 das Wicklungspaket 4 mit Druck im Wesentlichen in der z-Richtung belastet. Je nach Ausgestaltung des elektrischen Transformators oder elektrischen Drosselspule kann es sich bei den Einspannelementen um eine Spannstange, eine Spannplatte oder einen Spannbolzen handeln. Das Wicklungspaket 4 wird allgemein auch als Wicklungen bezeichnet. Das Wicklungspaket 4 kann neben den Wicklungen weitere Elemente umfassen wie beispielsweise Distanzstücke, Distanzschalter, Stützringe oder Ähnliches.

Mittels eines optischen Sensors 12 wird die Dehnung des Einspannelements 10 im Wesentlichen in Zugrichtung z erfasst. Der Sensor 12 leitet sein erfasstes Signal 14 an eine Steuereinheit 16 weiter. Die Steuereinheit 16 muss nicht zwangsläufig Steuerfunktionen umfassen, sondern kann auch lediglich eine Diagnose und eine Erfassung durchführen. Das Signal 15 wird bevorzugt über einen optischen Leiter an die Steuereinheit 16 weitergeführt.

Eine gemäß einer gestrichelten Linie angedeutete Kesselwand 18 trennt ein Inneres 20 von einem Äußeren 22 des elektrischen Transformators oder der elektrischen Drosselspule. Die Wicklungen 4 und das Einspannelement 10 sind bevorzugt innerhalb eines Kessels des elektrischen Transformators oder der elektrischen Drosselspüle angeordnet. Die Steuereinheit 16 ist bevorzugt außerhalb des Kessels angeordnet, um nicht durch elektromagnetische Wellen ausgehend von den Wicklungen 4 beeinflusst zu werden.

Ein elektrischer Transformators umfasst mehrere Schenkel, wobei ein Schenkel zumindest abschnittsweise und schematisiert das Wicklungspaket 4, die Verbindungselemente 6 und 8 sowie ein Einspannelement 10 umfasst. Jedem Einspannelement 10 ist zumindest ein optischer Sensor 12 zugeordnet. Jeder optische Sensor 12 ermittelt eine Dehnung des zugeordneten Einspannelements 10. Durch einen Vergleich der Dehnungen kann einer der Schenkel als fehlerbehaftet identifiziert werden. Der Vergleich der Dehnungen kann beispielsweise durch einen Vergleich des zeitlichen Verlaufs der Dehnungen ermittelt werden, indem ein Verlauf einer Dehnung eines zugeordneten Schenkels sich wesentlich beispielsweise durch einen festen Wert von den anderen beiden Verläufen der Dehnungen der anderen Schenkel unterscheidet.

Bei dem Sensor 12 kann es sich um einen faseroptischen Sensor, insbesondere einen EFPI-Sensor (EFPI = Extrinsisches Faser-Fabry-Perot-Interferometer) oder ein FBG-Sensor (FBG = Faser-Bragg-Gitter) handeln. Selbstverständlich können auch zwei Sensoren zur Erfassung der Dehnung verwendet werden, beispielsweise um ein redundantes Sensorsystem 12 zu schaffen und/oder eine Plausibilisierung der erhaltenen Signale durchzuführen. Weitergehend kann ein zusätzlicher Temperatursensor in der Nähe zumindest eines Sensors 12 angeordnet werden, um eine Temperaturkompensation des erhaltenen Signals durchzuführen.

Die Dehnung ε wird beispielsweise nach der nachfolgenden Formel 1 berechnet:

$$\varepsilon \;=\; \Delta l \;/\; l \qquad\qquad (1)$$

Hierbei wird ε aus der Änderung der Länge $\Delta l$ geteilt durch die ursprüngliche Länge ermittelt. Die mittels dem Sensor 12 und dem Steuergerät 16 ermittelte Dehnung des Einspannelements 10 gilt als Maß für eine auf das Einspannelements 10 wirkenden Zugkraft. In einem stromlosen Zustand eines Transformators entspricht beispielsweise die Summe der Zugkräfte der Spannplatten der Summe der Wicklungseinspannkräfte, die auf die Wicklungspakete 4 wirken. Ein Verlust einer Wicklungseinspannkraft hat damit zur Folge, dass die Kräfte auf die Einspannelemente 10 ebenfalls reduziert wird. Somit kann durch eine Messung der Dehnung des Einspannelements 10 auf die herrschenden Wicklungseinspannkräfte geschlossen werden.

Selbstverständlich umfasst der elektrische Transformator oder die elektrische Drosselspule weitere nicht gezeigte Elemente und ist selbstverständlich im Gegensatz zu den lediglich zwei dargestellten Dimensionen dreidimensional ausgestaltet. Die vorliegenden Vorrichtungen gemäß dem elektrischen Transformator oder der elektrischen Drosselspule sind für den Hochspannungsbereich und/oder den Mittelspannungsbereich ausgebildet.

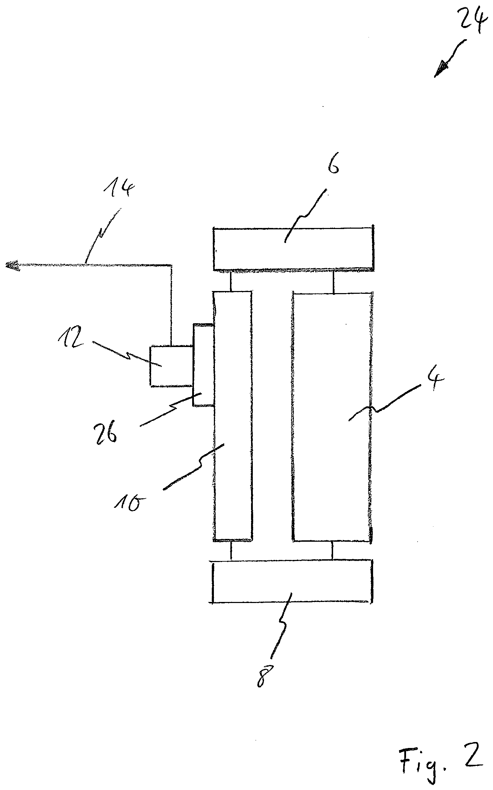

Figur 2 zeigt einen schematischen Ausschnitt 24 eines elektrischen Transformators oder einer elektrischen Drosselspule. Im Unterschied zur Figur 1 ist der optische Sensor 12 auf einem Metallträger 26 angeordnet. Der Metallträger 26 wiederum ist materialschlüssig mit dem Einspannelement 10 verbunden. Der Metallträger 26 kann beispielsweise als Platte oder Streifen ausgebildet sein.

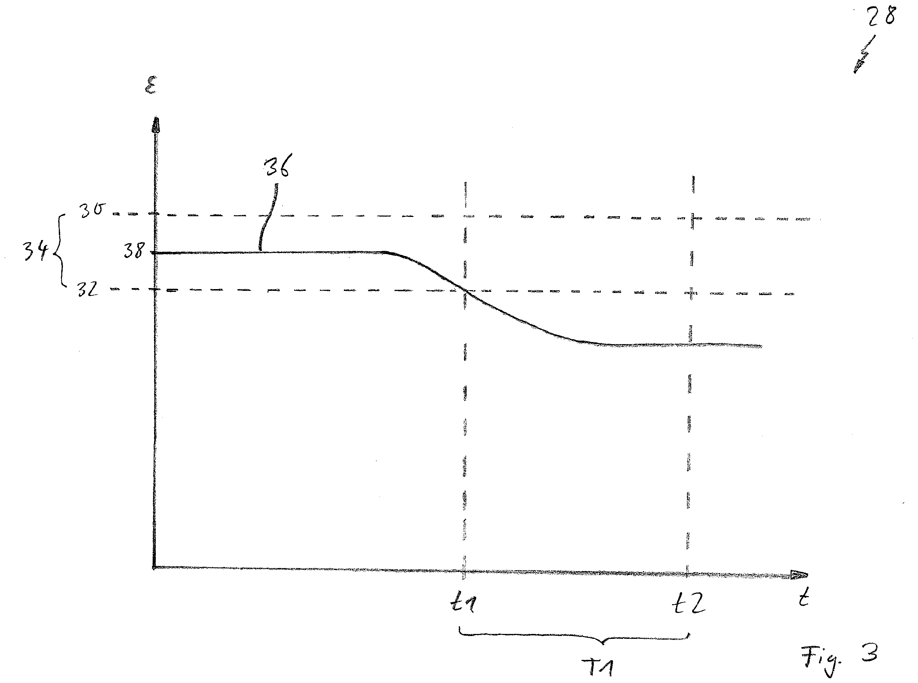

Figur 3 zeigt ein schematisches Dehnungs-Zeit-Diagramm 28. Eine obere Grenze 30 und eine untere Grenze 32 definieren einen Toleranzbereich 34. Ein beispielhafter Verlauf 36 einer gemessenen Dehnung ε über der Zeit t befindet sich zunächst in dem Toleranzbereich 34 bei einem ersten Wert 38. Zu einem Zeitpunkt t1 sinkt der Verlauf 36 unter die untere Grenze 32 und verlässt damit den Toleranzbereich 34. Bis zu dem Zeitpunkt t1 wird damit ein Normalbetrieb des elektrischen Transformators oder der Drosselspule erkannt. Demgegenüber wird ein Fehlerbetrieb dann erkannt, wenn die erfasste Dehnung ε über eine erste Zeitdauer T1 einen zweiten Wert außerhalb des Toleranzbereichs 34 einnimmt. Befindet sich die erfasste Dehnung ε somit zum Zeitpunkt t2 und nach Ablauf der Zeitdauer T1 außerhalb des Toleranzbereichs 34, so wird der Fehlerbetrieb erkannt. Beim Erkennen des Fehlerbetriebs kann der Transformator oder die Drosselspule stromlos geschaltet werden.

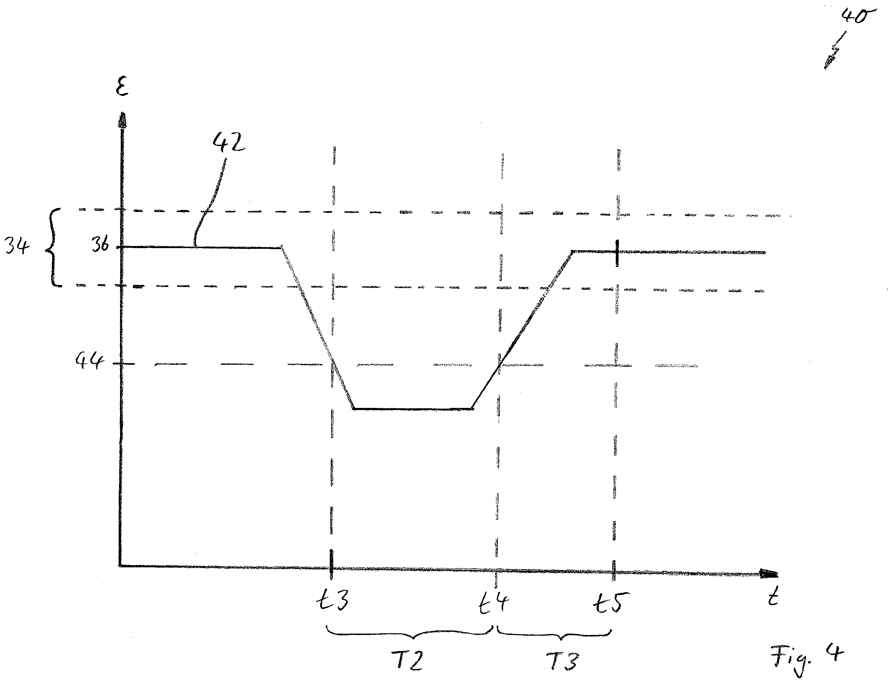

Figur 4 zeigt ein weiteres schematisches Dehnungs-Zeit-Diagramm 40. Ein Verlauf 42 befindet sich zunächst bei dem ersten Wert 36 innerhalb des Toleranzbereichs 34. Zu einem ersten Zeitpunkt t3 fällt der Verlauf 42 unter einen ersten Schwellwert 44. Zu einem zweiten Zeitpunkt t4 überschreitet der Verlauf 42 den ersten Schwellwert 44 nach oben, um in den Toleranzbereich 34 zurückzukehren. Nimmt der Verlauf 42 zu einem dritten Zeitpunkt t5 einen zweiten Wert in dem Toleranzbereich 34 an, wie der Verlauf 42 zeigt, so kann auf einen Kurzschluss geschlossen werden. Das Erreichen des Toleranzbereichs 34 durch den Verlauf 42 bedeutet, dass sich nach einem Kontrahieren der Wicklungen 4 während des Kurzschlusses wieder die durch den Toleranzbereich 34 definierte nötige Einspannkraft bezüglich der Wicklungen 4 einstellt. Gemäß der Zeitpunkte t3 bis t5 können Zeitdauern T2 und T3 definiert werden, um die Kurzschlusserkennung durchzuführen. Die Zeitdauer T2 kann beispielsweise auf einen und einen Maximalwert von 3 s bis 5 s je nach Ausgestaltung des Transformators oder der Drosselspule und/oder je nach zu erwartenden Kurzschlüssen gewählt werden. Die Zeitdauer t3 kann auf einen festen Wert, beispielsweise 2 s, gewählt werden.

Zwischen den Zeitpunkten t3 und t4 kann zum einen eine Maximalwertaufzeichnung bzw. Minimalwertaufzeichnung geschehen, um Rückschlüsse auf die Dimension des stärksten bzw. schwächsten Kurzschlusses zu erhalten. Zusätzlich oder alternativ kann die jeweilige Zeitdauer T2, die tatsächlich vorlag, zu einer Gesamtdauer aufsummiert werden, um bei einem Überschreiten eines Grenzwerts durch die Gesamtzeitdauer ein Erreichen der maximalen Lebensdauer oder ein Ende eines Wartungsintervalls festzustellen.

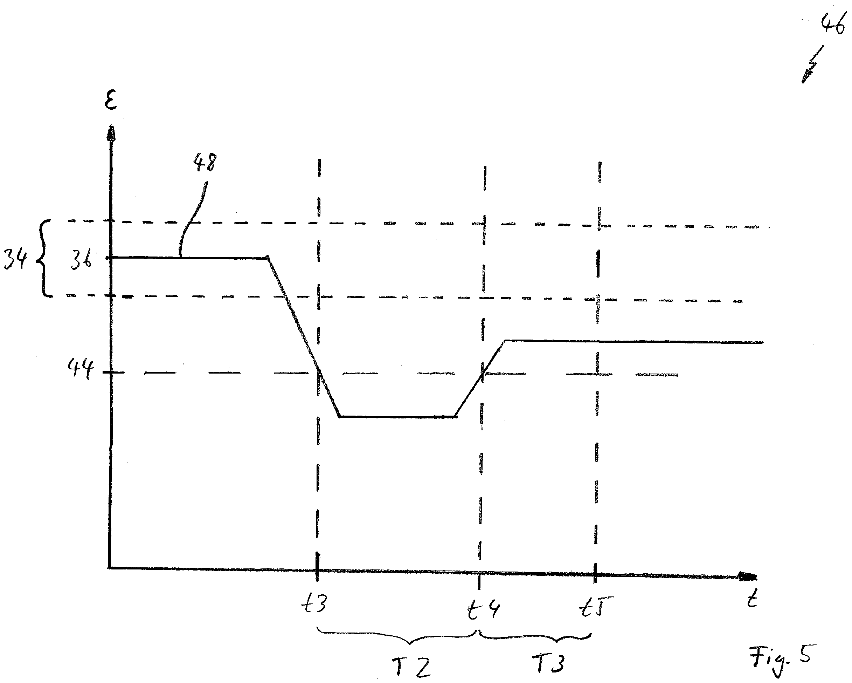

Figur 5 zeigt ein weiteres schematisches Dehnungs-Zeit-Diagramm 46. Im Unterschied zum Diagramm 40 aus Figur 4 kehrt ein Verlauf 48 nach dem Zeitpunkt t4 und nach Ablauf der Zeitdauer T3 nicht in den Toleranzbereich 34 zurück. In diesem Fall kann darauf geschlossen werden, dass der Kurzschluss mit einer Dauer T2 ursächlich dafür war, dass zum einen die Dehnung ε nicht in den Toleranzbereich 34 zurückkehren konnte und damit zum anderen die benötigte Einspannkraft für die Wicklungen 4 nach dem Kurzschluss nicht mehr gewährleistet ist.

Werden beispielsweise mehrere Einspannelemente 10 unterschiedlicher Schenkel eines elektrischen Transformators überwacht, so zeigt beispielsweise eines der Einspannelemente 10 das Verhalten nach der Figur 5, wohingegen alle anderen Einspannelemente 10 das Verhalten nach der Figur 4 zeigen. Dasjenige Einspannelement 10, das das Verhalten nach Figur 5 zeigt, ist somit durch den vorangegangenen Kurzschluss potenziell beschädigt worden. In diesem Fall kann der Transformator beispielsweise stromlos geschaltet werden, um weitere Zerstörungen zu vermeiden und eine Wartung durchzuführen.

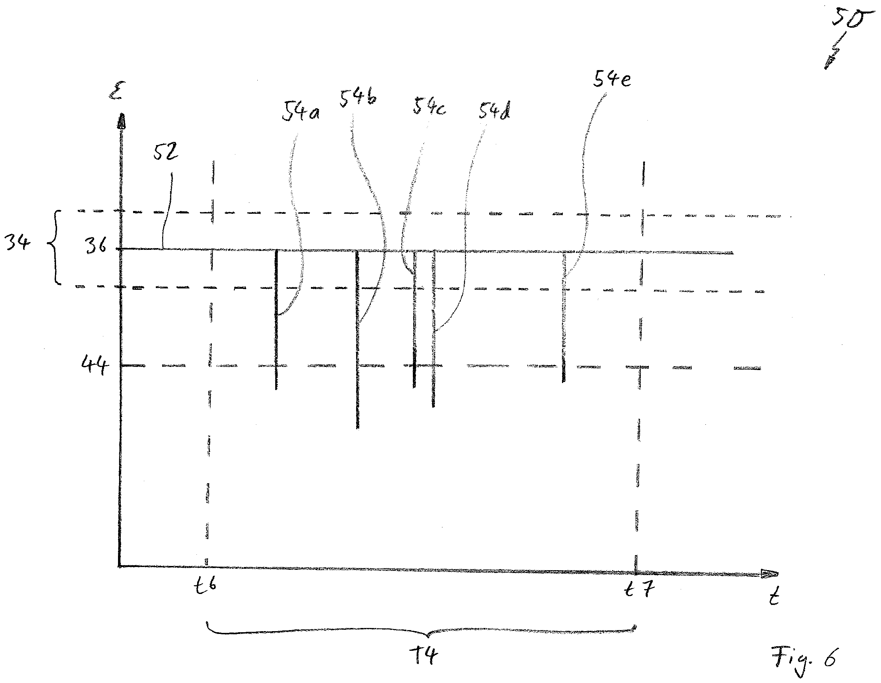

Figur 6 zeigt ein weiteres Dehnungs-Zeit-Diagramm 50. Ein Verlauf 52 zeigt, wie eine Anzahl von Kurzschlüssen 54 pro Zeiteinheit T4 zwischen Zeitpunkten t6 und t7 mittels des Schwellwerts 44 erkannt werden. Die Zeiteinheit T4 kann insbesondere ein Tag, eine Woche, einen Monat oder ein Jahr umfassen. Bei einem Überschreiten eines Grenzwerts durch die Anzahl der Kurzschlüsse pro Zeiteinheit T4 wird eine Abweichung von dem Normalbetrieb festgestellt. So kann beispielsweise bei einer erkannten Überschreitung erkannt werden, dass der zugehörige Transformator oder die zugehörige Drosselspüle außerhalb ihrer Leistungsbeschreibung betrieben wird.

**Patentansprüche**

1. Elektrischer Transformator oder elektrische Drosselspule mit mehreren Schenkeln, wobei ein jeweiliger Schenkel Wicklungen (4) und ein zugeordnetes Einspannelement (10) umfasst, wobei die jeweiligen Wicklungen mittels des jeweiligen unter Zug stehenden Einspannelements (10) mit Druck belastet werden, wobei jedem der Einspannelemente (10) zumindest ein optischer Sensor (10) zugeordnet ist, wobei eine Dehnung (ε) des zugeordneten unter Zug stehenden Einspannelements (10) im Wesentlichen in Zugrichtung (z) mittels des jeweiligen optischen Sensors (12) erfassbar ist, und wobei durch einen Vergleich der Dehnungen (ε) einer der Schenkel als fehlerbehaftet identifizierbar ist.

2. Elektrischer Transformator oder elektrische Drosselspule nach dem Anspruch 1, wobei der jeweilige optische Sensor (12) auf dem zugeordneten Einspannelement (10) oder auf einem Metallträger (26) angeordnet ist, wobei der Metallträger (26) mit dem Einspannelement (10) materialschlüssig verbunden ist, insbesondere verschweißt ist.

3. Verfahren zum Betreiben eines elektrischen Transformators oder einer elektrischen Drosselspule mit Wicklungen (4), die mittels eines unter Zug stehenden Einspannelements (10) mit Druck belastet werden, wobei der elektrische Transformator oder die Drosselspule einen optischen Sensor (12) umfasst, **dadurch gekennzeichnet,**

   - **dass** der elektrische Transformator mehrere Schenkel mit einem zugeordneten Einspannelement (10) aufweist, - dass jedem der Einspannelemente (10) zumindest ein optischer Sensor (12) zugeordnet ist,
   - **dass** eine Dehnung (ε) des zugeordneten unter Zug stehenden Einspannelements (10) im Wesentlichen in Zugrichtung (z) mittels des jeweiligen optischen Sensors (12) erfasst wird, und
   - **dass** durch einen Vergleich der Dehnungen (ε) einer der Schenkel als fehlerbehaftet identifiziert wird.

4. Verfahren nach dem Anspruch 3, wobei ein Normalbetrieb erkannt wird, wenn die erfasste Dehnung (ε) einen ersten Wert (36) in einem Toleranzbereich (34) einnimmt, und wobei ein Fehlerbetrieb erkannt wird, wenn die erfasste Dehnung (ε) über eine erste Zeitdauer (T1) einen zweiten Wert außerhalb des Toleranzbereichs (34) einnimmt.

5. Verfahren nach Anspruch 4, wobei der elektrische Transformator oder die Drosselspule auf die Erkennung des Fehlerbetriebs hin stromlos geschaltet wird.

6. Verfahren nach einem der Ansprüche 3 bis 5, wobei ein Kurzschluss erkannt wird, wenn die erfasste Dehnung (ε) ausgehend von einem ersten Wert (36) zu einem ersten Zeitpunkt (t3) einen ersten Schwellwert (44) unterschreitet, die Dehnung (ε) zu einem zweiten Zeitpunkt (t4) nach dem ersten Zeitpunkt (t3) den ersten Schwellwert (44) überschreitet, und die Dehnung (ε) zu einem dritten Zeitpunkt (t5) nach dem zweiten Zeitpunkt (t4) einen zweiten Wert einnimmt.

7. Verfahren nach Anspruch 6, wobei eine Zeitdauer (T2) eines Kurzschlusses in Abhängigkeit von dem ersten und dem zweiten Zeitpunkt (t3, t4) ermittelt wird, wobei über mehrere Kurzschlüsse die Zeitdauer (T2) zu einer Gesamtzeitdauer aufsummiert wird, und wobei bei einem Überschreiten eines Grenzwerts durch die Gesamtzeitdauer ein Erreichen der maximalen Lebensdauer oder ein Ende eines Wartungsintervalls festgestellt wird.

8. Steuereinheit (16) für einen elektrischen Transformator oder eine Drosselspule, die mit einem digitalen Rechengerät versehen ist, auf dem ein Computerprogramm abläuft, das dazu ausgebildet ist, ein Verfahren nach einem der Ansprüche 3 bis 7 auszuführen.

**Claims**

1. Electric transformer or electric shunt reactor with windings (4) and clamping elements (10), wherein the windings (4) are pressure-loaded by means of the clamping elements (10) which are under tension, wherein the electric transformer or shunt reactor comprises optical sensors (12), wherein:

   - the electric transformer or electric shunt reactor has several legs, each with an assigned clamping element (10),
   - at least one optical sensor (12) is assigned to each of the clamping elements (10),
   - an elongation (ε) of the assigned clamping element (10) under tension, substantially in the tension direction (z), can be detected by means of the respective optical sensor (12), and
   - by comparison of the elongations (ε), one of the legs can be identified as defective.

2. Electric transformer or electric shunt reactor according to claim 1, wherein the optical sensors (12) are each arranged on a clamping element (10) or on a metal carrier (26), wherein the metal carrier (26) is connected by substance bonding, in particular welded, to the clamping element (10).

3. Method for operating an electric transformer or electric shunt reactor with windings (4) and clamping elements (10), wherein the windings (4) are pressure-loaded by means of the clamping elements (10) which are under tension, wherein the electric transformer or shunt reactor comprises optical sensors (12), wherein:

- the electric transformer or electric shunt reactor has several legs, each with an assigned clamping element (10),
- at least one optical sensor (12) is assigned to each of the clamping elements (10),
- an elongation ($\varepsilon$) of the assigned clamping element (10) under tension, substantially in the tension direction (z), is detected by means of the respective optical sensor (12), and
- by comparison of the elongations ($\varepsilon$), one of the legs is identified as defective.

4. Method according to claim 3, wherein normal operation is identified if the detected elongation ($\varepsilon$) has a first value (36) in a tolerance range (34), and wherein a defective operation is identified if the detected elongation ($\varepsilon$) assumes a second value outside the tolerance range (34) for a first duration (T1).

5. Method according to claim 4, wherein the electric transformer or shunt reactor is switched unpowered on detection of a defective operation.

6. Method according to any of claims 3 to 5, wherein a short circuit is identified if the detected elongation ($\varepsilon$), starting from a first value (36) at a first time (t3), falls below a first threshold value (44), the elongation ($\varepsilon$) exceeds the first threshold value (44) at a second time (t4) after the first time (t3), and the elongation (e) assumes a second value at a third time (t5) after the second time (t4).

7. Method according to claim 6, wherein a duration (T2) of a short circuit is determined depending on the first and second times (t3, t4), wherein over several short-circuits, the duration (T2) is accumulated into a total duration, and wherein a reaching of the maximum service life or an end of a service interval is established when the total duration exceeds a limit value.

8. Control unit (16) for an electric transformer or shunt reactor, which unit is provided with a digital calculator device on which a computer program runs which is configured to perform a method according to any of claims 3 to 7.

**Revendications**

1. Transformateur électrique ou réacteur shunt électrique avec des enroulements (4) et des éléments de serrage (10), les enroulements (4) étant sollicités en pression au moyen des éléments de serrage (10) soumis à une traction, le transformateur électrique ou le réacteur shunt comprenant des capteurs optiques (12),

- le transformateur électrique ou le réacteur shunt électrique comprenant plusieurs branches, chacune avec un élément de serrage (10) correspondant,
- à chacun des éléments de serrage (10) correspond au moins un capteur optique (10),
- une dilatation ($\varepsilon$) de l'élément de serrage (10) soumis à une traction, dans la direction de traction (z), pouvant être mesurée au moyen du capteur optique (12) correspondant et
- une comparaison des dilatations ($\varepsilon$) permettant d'identifier une des branches comme défectueuse.

2. Transformateur électrique ou réacteur shunt électrique selon la revendication 1, les capteurs optiques (12) étant disposés chacun sur un élément de serrage (10) ou sur un support métallique (26), le support métallique (26) étant relié par liaison de matière avec l'élément de serrage (10), plus particulièrement par soudure.

3. Procédé de commande d'un transformateur électrique ou d'un réacteur shunt électrique avec des enroulements (4) et des éléments de serrage (10), les enroulements (4) étant sollicités en pression au moyen des éléments de serrage (10) soumis à une traction, le transformateur électrique ou le réacteur shunt électrique comprenant des capteurs optiques (12),

- le transformateur électrique ou le réacteur shunt électrique comprenant plusieurs branches, chacune avec un élément de serrage (10) correspondant,
- à chacun des éléments de serrage (10) correspond au moins un capteur optique (10),
- une dilatation ($\varepsilon$) de l'élément de serrage (10) soumis à une traction, dans la direction de traction (z), pouvant être mesurée au moyen du capteur optique (12) correspondant et
- une comparaison des dilatations ($\varepsilon$) permettant d'identifier une des branches comme défectueuse.

4. Procédé selon la revendication 3, un fonctionnement normal étant détecté lorsque la dilatation ($\varepsilon$) mesurée prend une première valeur (36) dans une plage de tolérance (34) et un dysfonctionnement étant détecté lorsque la dilatation ($\varepsilon$) mesurée sur une première durée (T1) prend une deuxième valeur hors de la plage de tolérance (34).

5. Procédé selon la revendication 4, le transformateur électrique ou le réacteur shunt électrique étant mis hors tension lors de la détection d'un dysfonctionnement.

**6.** Procédé selon l'une des revendications 3 à 5, un court-circuit étant détecté lorsque la dilatation ($\varepsilon$) mesurée passe, à un premier moment (t3), à partir d'une première valeur (36), en dessous d'une première valeur seuil (44), la dilatation ($\varepsilon$) dépasse, à un deuxième moment (t4) après le premier moment (t3), la première valeur seuil (44) et la dilatation ($\varepsilon$) prend, à un troisième moment (t5) après le deuxième moment (t4), une deuxième valeur.

**7.** Procédé selon la revendication 6, une durée (T2) du court-circuit étant déterminée en fonction du premier et du deuxième moment (t3, t4), la durée (T2) étant cumulée, sur plusieurs court-circuits, afin d'obtenir une durée totale et, lors d'un dépassement d'une valeur limite par la durée totale, il est constaté que la durée de vie maximale ou que la fin d'un intervalle de maintenance a été atteinte.

**8.** Unité de commande (16) pour un transformateur électrique ou un réacteur shunt électrique, qui est munie d'un calculateur numérique sur lequel s'exécute un programme informatique qui est conçu pour exécuter un procédé selon l'une des revendications 3 à 7.

Fig. 1

Fig. 2

Fig. 3

Fig. 4

Fig. 5

EP 2 869 314 B1

Fig. 6

**EP 2 869 314 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 8316592 U1

- DE 2448876 A1